Europäisches Patentamt

European Patent Office

Office européen des brevets

(19)

(11) Numéro de publication : **0 406 035 B1**

(12) ## FASCICULE DE BREVET EUROPEEN

(45) Date de publication du fascicule du brevet :
**20.07.94 Bulletin 94/29**

(51) Int. Cl.$^5$ : **C08L 23/08,** C08K 3/22,
H01B 3/44

(21) Numéro de dépôt : **90401342.2**

(22) Date de dépôt : **21.05.90**

(54) Compositions polymères ignifugées et leur application au revêtement de câbles électriques.

(30) Priorité : **25.05.89 FR 8906847**

(43) Date de publication de la demande :
**02.01.91 Bulletin 91/01**

(45) Mention de la délivrance du brevet :
**20.07.94 Bulletin 94/29**

(84) Etats contractants désignés :
**AT BE CH DE DK ES FR GB GR IT LI LU NL SE**

(56) Documents cités :
**EP-A- 0 004 017
EP-A- 0 212 142
EP-A- 0 212 825
DE-A- 3 633 056**

(73) Titulaire : **ELF ATOCHEM S.A.
4 & 8, Cours Michelet
La Défense 10
F-92800 Puteaux (FR)**

(72) Inventeur : **Bréant, Patrice
505, rue de Lalleau
F-62350 Robecq (FR)**

(74) Mandataire : **Rochet, Michel
ELF ATOCHEM S.A.
Département Propriété Industrielle
4-8, Cours Michelet
La Défense 10 - Cedex 42
F-92091 Paris-La-Défense (FR)**

EP 0 406 035 B1

Jouve, 18, rue Saint-Denis, 75001 PARIS

## Description

La présente invention concerne des compositions polymères ignifugées contenant des copolymères de l'éthylène. Plus particulièrement, ces compositions ne contiennent pas de dérivés halogénés et sont aptes à être transformées par des techniques classiques en articles résistant bien au feu tels que notamment les revêtements isolants pour câbles électriques.

L'amélioration de la tenue au feu des compositions contenant des matières polymères est un objectif constant des fabricants et transformateurs de ces matières, visant à obtenir une réduction notable de l'inflammabilité et de l'aptitude à la propagation des flammes de ces matériaux. L'utilisation de dérivés halogénés comme agents d'ignifugation est bien connue mais présente le grand inconvénient de conduire, lors de la combustion, à des gaz toxiques et corrosifs. Les fabricants et transformateurs se sont alors dirigés vers la mise au point de compositions contenant des oxydes, hydroxydes ou sels minéraux de métaux tels que les hydrates d'alumine et de magnésie.

Cependant l'ajout de telles charges minérales en quantité suffisante pour obtenir une bonne résistance au feu conduit à des matériaux présentant des propriétés mécaniques médiocres et/ou de grandes difficultés de transformation par les méthodes classiques telles que l'extrusion. Ainsi l'addition de fortes quantités d'hydrate d'alumine à un copolymère éthylène/(méth)acrylate d'alkyle conduit à une composition dont les propriétés mécaniques sont très inférieures à celles dudit copolymère.

Le brevet DE- A 3633056 concerne des mélanges extrudables pour la fabrication d'enveloppes ignifugées ne contenant pas d'halogènes, pour des objets longilignes tels que des cables et des fils électriques, des faisceaux tubulaires de cables, des canalisations tubulaires, caractérisés en ce qu'ils sont à base de copolymères d'éthylène avec une partie en poids de comonomères comprise entre 10 et 30 %, et en ce qu'ils contiennent en outre 10 à 50 % en poids du total de composés polymères augmentant la dureté à chaud desdites enveloppes.

Ces composés polymères augmentant la dureté à chaud des enveloppes peuvent être constitués d'un polyéthylène linéaire de densité comprise entre 0,88 et 0,95 g/cm3.

Le problème que la présente invention vise à résoudre est de définir des compositions polymères ignifugées au moyen de composés tels que les hydrates d'alumine ou magnésie et qui possèdent simultanément une bonne résistance au feu, des propriétés mécaniques et une facilité de mise en oeuvre acceptables, c'est-à-dire non exagérément diminuées par rapport à celles des compositions ne contenant pas d'agent ignifugeant. Les différents constituants doivent assurer une bonne compatibilisation de la charge minérale.

Ce problème peut être résolu au moyen des compositions selon l'invention.

Un premier objet de la présente invention consiste en des compositions polymères ignifugées comprenant une charge minérale hydratée, au moins un copolymère éthylène/ (méth)acrylate d'alkyle et au moins un copolymère d'éthylène et d'au moins une $\alpha$-oléfine, caractérisées en ce qu'elles sont constituées essentiellement de 120 à 240 parties en poids de charge minérale hydratée pour 100 parties en poids d'une phase polymérique constituée :

a) de 30 à 75 parties en poids d'au moins un copolymère éthylène/(méth)acrylate d'alkyle (A) ayant une teneur en (méth)acrylate d'alkyle comprise entre 1 et 50% en moles,

b) de 10 à 30 parties en poids d'au moins un terpolymère éthylène/(méth)acrylate d'alkyle/anhydride d'acide dicarboxylique insaturé (B) comprenant de 0,3 à 3% en moles de motifs dérivés d'un anhydride d'acide dicarboxylique insaturé,

c) de 5 à 55 parties en poids d'au moins un copolymère d'éthylène et d'au moins une $\alpha$-oléfine (C) ayant une densité comprise entre 0,865 et 0,915 et un taux de cristallinité au moins égal à 5%, et

d) de 0 à 5 parties en poids d'au moins un polyéthylène basse densité (D).

Comme exemples de charges minérales hydratées utilisables dans les compositions selon l'invention, on peut citer des hydroxydes d'aluminium $Al(OH)_3$ et de magnésium $Mg(OH)_2$, les carbonates hydratés tel que le carbonate hydraté de magnésium et de calcium, par exemple de granulométrie moyenne avantageusement comprise entre 0,5 et 2 $\mu$m.

Les copolymères éthylène/(méth)acrylate d'alkyle (A) sont généralement obtenus par copolymérisation, sous pression élevée et à haute température en présence d'initiateurs de radicaux libres, d'éthylène et d'au moins un ester de l'acide acrylique ou de l'acide méthacrylique choisi notamment parmi l'acrylate de méthyle, l'acrylate d'éthyle, l'acrylate de n-butyle et le méthacrylate de méthyle. Ils contiennent avantageusement de 5 à 35% environ en moles de (méth)acrylate d'alkyle.

Par terpolymère (B) éthylène/(méth)acrylate d'alkyle/anhydride d'acide dicarboxylique insaturé, on entend, selon la présente invention, un composé comprenant :

- de 83 à 98,7% en moles de motifs dérivés de l'éthylène,
- de 1 à 14% en moles de motifs dérivés d'au moins un ester de l'acide acrylique et/ou méthacrylique,

2

et

- de 0,3 à 3% en moles de motifs dérivés d'un anhydride d'acide dicarboxylique insaturé tel que, par exemple, l'anhydride maléique.

L'indice de fluidité du terpolymère (B), mesuré dans les conditions standards (190°C, charge de 2,16 kg) de la norme ASTM-1238, est avantageusement compris entre 1 et 10 dg/min.

Ce terpolymère peut être obtenu par exemple dans les conditions décrites dans les documents FR-A-2 498 609, FR-A-2 569 411 et FR-A-2 569 412. L'ester de l'acide acrylique ou méthacrylique comporte de préférence un groupe alkyle de 1 à 8 atomes de carbone. A titre d'exemples, on peut citer les acrylates et méthacrylates de méthyle, d'éthyle, de n-propyle, d'iso-propyle, de n-butyle, d'iso-butyle, de n-pentyle, de n-hexyle, d'éthyl-2-hexyle, de n-octyle, de cyclohexyle.

Le copolymère (C) d'éthylène et d'au moins une α-oléfine est obtenu par copolymérisation, en présence de systèmes catalytiques de type Ziegler. Il a généralement un indice de fluidité standard (tel que défini précédemment) compris entre 1 et 5 dg/min.

Le polyéthylène basse densité (D) est obtenu par homopolymérisation de l'éthylène à température élevée (généralement 140 à 350°C) et sous haute pression (généralement 1000 à 4000 bars) en présence d'un initiateur de radicaux libres (tel que l'oxygène, les peroxydes ou les peresters). Sa densité est généralement comprise entre 0,915 et 0,935, et il a un indice de fluidité standard (tel que défini précédemment) avantageusement compris entre 1 et 10 dg/min.

Parmi les compositions selon l'invention, celles qui contiennent :

a) de 30 à 55 parties en poids de copolymère (A)
b) de 20 à 30 parties en poids de terpolymère (B)
c) de 15 à 45 parties en poids de copolymère (C)
d) de 0 à 3 parties en poids de polyéthylène (D)

pour 100 parties en poids de phase polymérique sont particulièrement avantageuses.

Sont plus particulièrement préférées celles qui contiennent, pour 100 parties en poids de phase polymérique:

a) de 40 à 50 parties en poids de copolymère (A)
b) de 25 à 30 parties en poids de terpolymère (B)
c) de 25 à 40 parties en poids de copolymère (C).

Les compositions selon l'invention ont généralement un indice limite d'oxygène (tel que défini ci-après) d'au moins 40%, un allongement à la rupture d'au moins 100% et une résistance à la rupture d'au moins 10 MPa, et par ailleurs une tenue au gouttage (test de simulation en nappes) parfaite.

Les compositions selon l'invention peuvent être préparées par malaxage des ingrédients sous forme de poudre ou granulés de façon à obtenir un mélange homogène prêt à l'emploi.

Elles peuvent être également préparées par malaxage puis fusion et granulation des constituants de la phase polymérique. Les granulés obtenus sont ensuite malaxés avec la quantité voulue d'agent ignifugeant dans le but de fournir un mélange homogène prêt à l'emploi.

Enfin les compositions peuvent être préparées par malaxage de tous les constituants, ceux de la phase polymérique étant à l'état fondu, puis extrusion et granulation. L'extrusion peut également être réalisée sur une coextrudeuse ; les compositions dans lesquelles la phase polymérique est à l'état fondu et la charge minérale hydratée régulièrement dispersée, peuvent alors être directement transformées, par exemple en revêtement de câble métallique.

Un second objet de la présente invention concerne des articles industriels comprenant une composition telle que décrite ci-dessus. Plus particulièrement, ces articles industriels consistent en un revêtement de câble électrique.

De façon à éviter le fluage à chaud, on procède avantageusement, notamment lors de la fabrication de revêtements de câbles électriques, à la réticulation des compositions selon l'invention. Cette réticulation est réalisée par l'ajout d'une quantité d'agent réticulant suffisante pour éviter le fluage à la température de transformation envisagée (par exemple environ 80°C pour les câbles d'énergie). Le réticulant est notamment choisi parmi les peroxydes, les silanes éthyléniquement insaturés tels le vinyltriméthoxysilane (dans un premier temps le composé est greffé sur la chaîne polyéthylénique et dans un second temps la réticulation a lieu par action de l'eau pour former des ponts Si-O-Si entre deux molécules), les dérivés époxydiques agissant par réaction sur les fonctions anhydrides du terpolymère (B).

Outre cette application en câblerie, les compositions selon l'invention trouvent d'autres applications où leur caractère de résistance au feu et leurs bonnes propriétés mécaniques sont requises. Elles ont l'avantage d'être transformables en articles industriels (feuilles, plaques, profilés, corps creux, tubes, tuyaux), présentant une résistance au feu améliorée, par les techniques classiques de transformation des polyoléfines (extrusion, injection, roto-moulage).

3

Les exemples suivants ont pour but d'illustrer l'invention de façon non limitative.

Toutes les compositions sont préparées en réalisant un mélange des différents constituants à l'état de poudres ou granulés dans un mélangeur interne, dans lequel les constituants polymères sont fondus, puis en extrudant le mélange au moyen d'une extrudeuse bi-vis à une température de 145°C. Toutes contiennent 168 parties en poids d'hydrate d'alumine Al(OH)$_3$ de granulométrie moyenne 0,5 µm.

Les propriétés suivantes sont mesurées sur les compositions extrudées :
- la résistance à la rupture (RR) déterminée selon la norme ASTM D-638 et exprimée en Mégapascals (MPa),
- l'allongement a la rupture (AR) déterminé selon la norme ASTM D-638 et exprimé en %,
- l'indice limite d'oxygène (IOL) déterminé selon la norme ASTM D-2863 et exprimé en %.

### EXEMPLES 1 à 4 (comparatifs)

Les compositions ont été préparées en utilisant, outre la charge ci-dessus, les constituants polymères suivants :
- un copolymère éthylène/acrylate de méthyle (A) ayant une teneur de 30% en poids d'acrylate de méthyle, un indice de fluidité (mesuré selon la norme ASTM D-1238 à 190°C sous une charge de 2,16 kg) égal à 2 dg/min, commercialisé par la Société NORSOLOR sous la dénomination LOTRYL® 3610,
- un terpolymère éthylène/acrylate de n-butyle/anhydride maléique (B) contenant 97,8% en moles d'unités dérivées de l'éthylène, 1,2% en moles d'unités dérivées de l'acrylate de n-butyle et 1% en moles d'unités dérivées de l'anhydride maléique, commercialisé par la Société NORSOLOR sous la dénomination LOTADER® 3200,
- un copolymère éthylène/butène-1 (C) ayant une densité de 0,900, un indice de fluidité (mesuré selon la norme ASTM D-1238 à 190°C sous une charge de 2,16 kg) de 1 dg/min., commercialisé par la Société NORSOLOR sous la dénomination NORSOFLEX®FW 1900.

On a indiqué dans le tableau I les quantités en parties en poids de constituants utilisées pour préparer les compositions et les résultats des mesures de leurs propriétés.

Aucune des compositions-témoins ne possède simultanément un ensemble de propriétés satisfaisantes. Notamment leur allongement à la rupture ou leur résistance à la rupture est insuffisant pour les applications envisagées.

## TABLEAU I

| Exemple | (A) | (B) | (C) | RR | AR | IOL |
|---------|-----|-----|-----|-----|-----|-----|
| 1 | 100 | - | - | 7,5 | 215 | 38 |
| 2 | - | 100 | - | 17 | 70 | 40 |
| 3 | - | - | 100 | 5 | 120 | 35 |
| 4 | 50 | - | 50 | 9 | 145 | 39 |

### EXEMPLES 5 à 9

On a utilisé les mêmes constituants qu'aux exemples comparatifs 1 à 4, selon les quantités figurant au tableau II en parties en poids.

Les résultats des mesures effectuées figurent également au tableau II.

EP 0 406 035 B1

## TABLEAU II

| Exemple | (A) | (B) | (C) | RR | AR | IOL |
|---|---|---|---|---|---|---|
| 5 | 55 | 30 | 15 | 11 | 140 | 42 |
| 6 | 45 | 25 | 30 | 11 | 145 | 41 |
| 7 | 30 | 25 | 45 | 11 | 140 | 39 |
| 8 | 35 | 30 | 35 | 12 | 135 | 40 |
| 9 | 40 | 20 | 40 | 11 | 145 | 40 |

**Revendications**

1.  Compositions polymères ignifugées comprenant une charge minérale hydratée, au moins un copolymère éthylène/(méth)acrylate d'alkyle et au moins un copolymère d'éthylène et d'au moins une α-oléfine, caractérisées en ce qu'elles sont constituées essentiellement de 120 à 240 parties en poids de charge minérale hydratée pour 100 parties en poids d'une phase polymérique constituée :
    a) de 30 à 75 parties en poids d'au moins un copolymère éthylène/(méth)acrylate d'alkyle (A) ayant une teneur en (méth)acrylate d'alkyle comprise entre 1 et 50% en moles,
    b) de 10 à 30 parties en poids d'au moins un terpolymère éthylène/(méth)acrylate d'alkyle/anhydride d'acide dicarboxylique insaturé (B), comprenant de 0,3 à 3% en moles de motifs dérivés d'un anhydride d'acide dicarboxylique insaturé,
    c) de 5 à 55 parties en poids d'au moins un copolymère d'éthylène et d'au moins une α-oléfine (C) ayant une densité comprise entre 0,865 et 0,915 et un taux de cristallinité au moins égal à 5%, et
    d) de 0 à 5 parties en poids d'au moins un polyéthylène basse densité (D).

2.  Compositions selon la revendication 1, caractérisées en ce qu'elles contiennent, pour 100 parties en poids de phase polymérique :
    a) de 30 à 55 parties en poids de copolymère (A)
    b) de 20 à 30 parties en poids de terpolymère (B)
    c) de 15 à 45 parties en poids de copolymère (C)
    d) de 0 à 3 parties en poids de polyéthylène (D)

3.  Compositions selon la revendication 1, caractérisées en ce qu'elles contiennent, pour 100 parties en poids de phase polymérique :
    a) de 40 à 50 parties en poids de copolymère (A)
    b) de 25 à 30 parties en poids de terpolymère (B)
    c) de 25 à 40 parties en poids de copolymère (C).

4.  Compositions selon l'une des revendications 1 à 3, caractérisées en ce que la charge minérale hydratée est l'hydrate d'alumine utilisé à raison de 168 parties en poids pour 100 parties de phase polymérique.

5.  Compositions selon l'une des revendications 1 à 4, caractérisées en ce que le copolymère (A) contient environ 5 à 35% en moles de motifs dérivés de (méth)acrylate d'alkyle.

6.  Compositions selon l'une des revendications 1 à 5, caractérisées en ce que le terpolymère (B) comprend :
    - de 83 à 98,7% en moles de motifs dérivés de l'éthylène,
    - de 1 à 14% en moles de motifs dérivés d'au moins un ester de l'acide acrylique et/ou méthacrylique, et
    - de 0,3 à 3% en moles de motifs dérivés d'un anhydride d'acide dicarboxylique insaturé.

7.  Compositions selon l'une des revendications 1 à 6, caractérisées en ce que le terpolymère (B) a un indice de fluidité standard compris entre 1 et 10 dg/min (190°C, charge de 2,16 kg).

5

8. Compositions selon l'une des revendications 1 à 7, caractérisées en ce que le copolymère (C) a un indice de fluidité standard compris entre 1 et 5 dg/min (190°C, charge de 2,16 kg).

9. Compositions selon l'une des revendications 1 à 8, caractérisées en ce qu'elles possèdent un indice d'oxygène limite au moins égal à 40%, un allongement à la rupture au moins égal à 100% et une résistance à la rupture au moins égale à 10 MPa.

10. Compositions selon l'une des revendications 1 à 9, caractérisées en ce qu'elles sont en outre réticulées au moyen d'une quantité d'agent réticulant suffisante pour éviter le fluage à la température de transformation envisagée.

11. Articles industriels comprenant une composition conforme à l'une des revendications 1 à 10

12. Articles industriels selon la revendication 11, caractérisés en ce qu'ils consistent en un revêtement de câble électrique.


**Patentansprüche**

1. Feuerfeste Polymerzusammensetzungen, die einen mineralischen, hydratisierten Füllstoff, wenigstens ein Copolymer aus Ethylen und (Meth)Acrylsäurealkylester und wenigstens ein Copolymer aus Ethylen und wenigstens einem $\alpha$-Olefin enthalten, dadurch gekennzeichnet, daß die feuerfesten Polymerzusammensetzungen im wesentlichen aus 120 bis 240 Gewichtsteilen des mineralischen, hydratisierten Füllstoffes, bezogen auf 100 Gewichtsteilen einer Polymerphase, bestehen, wobei die Polymerphase zusammengesetzt ist aus:
   a) 30 bis 75 Gewichtsteilen wenigstens eines Copolymeren aus Ethylen und (Meth)Acrylsäurealkylester (A) mit einem Gehalt an (Meth)Acrylsäurealkylester zwischen 1 und 50 Mol-%,
   b) 10 bis 30 Gewichtsteilen wenigstens eines Terpolymeren aus Ethylen, (Meth)Acrylsäurealkylester und einem ungesättigten Dicarbonsäureanhydrid (B), enthaltend 0,3 bis 3 Mol-% abgeleitete Einheiten eines ungesättigten Dicarbonsäureanhydrids,
   c) 5 bis 55 Gewichtsteilen wenigstens eines Copolymeren aus Ethylen und wenigstens einem $\alpha$-Olefin (C) mit einer Dichte zwischen 0,865 und 0,915 und einem Kristallisationsgrad von wenigstens 5 %, und
   d) 0 bis 5 Gewichtsteilen wenigstens eines Polyethylens mit geringer Dichte.

2. Zusammensetzungen nach Anspruch 1, dadurch gekennzeichnet, daß 100 Gewichtsteile der Polymerphase:
   a) 30 bis 55 Gewichtsteile des Copolymeren (A)
   b) 20 bis 30 Gewichtsteile des Terpolymeren (B)
   c) 15 bis 45 Gewichtsteile des Copolymeren (C) und
   d) 0 bis 3 Gewichtsteile Polyethylen (D)
   enthalten.

3. Zusammensetzungen nach Anspruch 1, dadurch gekennzeichnet, daß 100 Gewichtsteile der Polymerphase:
   a) 40 bis 50 Gewichtsteile des Copolymeren (A)
   b) 25 bis 30 Gewichtsteile des Terpolymeren (B)
   c) 25 bis 40 Gewichtsteile des Copolymeren (C)
   enthalten.

4. Zusammensetzungen nach einem der Ansprüche 1 bis 3, dadurch gekennzeichnet, daß der mineralische, hydratisierte Füllstoff Aluminiumoxidhydrat ist, das in einem Verhältnis von 168 Gewichtsteilen auf 100 Teile der Polymerphase verwendet wird.

5. Zusammensetzungen nach einem der Ansprüche 1 bis 4, dadurch gekennzeichnet, daß das Copolymer (A) 5 bis 35 Mol-% abgeleitete Einheiten eines (Meth)Acrylsäurealkylesters enthält.

6. Zusammensetzungen nach einem der Ansprüche 1 bis 5, dadurch gekennzeichnet, daß das Terpolymer:
   - 83 bis 98,7 Mol-% abgeleitete Einheiten des Ethylens,

- 1 bis 14 Mol-% abgeleitete Einheiten des Acrylsäureesters und/oder Methacrylsäureesters, und
- 0,3 bis 3 Mol-% abgeleitete Einheiten des ungesättigten Dicarbonsäureanhydrids

enthält.

7. Zusammensetzungen nach einem der Ansprüche 1 bis 6, dadurch gekennzeichnet, daß das Terpolymer (B) eine Standardfließzahl zwischen 1 und 10 dg/min (190°C, Substanzmenge: 2,16 kg) hat.

8. Zusammensetzungen nach einem der Ansprüche 1 bis 7, dadurch gekennzeichnet, daß das Copolymer (C) eine Standardfließzahl zwischen 1 und 5 dg/min (190°C, Substanzmenge: 2,16 kg) hat.

9. Zusammensetzungen nach einem der Ansprüche 1 bis 8, dadurch gekennzeichnet, daß die Zusammensetzungen einen Sauerstoff-Index von wenigstens 40 %, eine Bruchdehnung von wenigstens 100 % und eine Bruchfestigkeit von wenigstens 10 MPa aufweist.

10. Zusammensetzungen nach einem der Ansprüche 1 bis 9, dadurch gekennzeichnet, daß die Zusammensetzungen darüber hinaus durch eine Menge an Vernetzungsmittel vernetzt sind, die ausreicht, um ein plastisches Fließen bei der vorgesehenen Verarbeitungstemperatur zu vermeiden.

11. Industriell gefertigte Artikel, die eine Zusammensetzung enthalten, die einem der Ansprüche 1 bis 10 entspricht.

12. Industriell gefertigte Artikel nach Anspruch 11, dadurch gekennzeichnet, daß diese Artikel eine Ummantelung für elektrische Kabel darstellen.

## Claims

1. Flame-retarded polymer compositions comprising a hydrated inorganic filler, at least one ethylene/alkyl (meth)acrylate copolymer and at least one copolymer of ethylene and of at least one $\alpha$-olefin, characterized in that they consist essentially of 120 to 240 parts by weight of hydrated inorganic filler per 100 parts by weight of a polymeric phase constituted:

   a) of 30 to 75 parts by weight of at least one ethylene/alkyl (meth)acrylate copolymer (A) having an alkyl (meth)acrylate content of between 1 and 50 mol%,

   b) of 10 to 30 parts by weight of at least one ethylene/alkyl (meth)acrylate/unsaturated dicarboxylic acid anhydride terpolymer (B), comprising from 0.3 to 3 mol% of units derived from an unsaturated dicarboxylic acid anhydride,

   c) of 5 to 55 parts by weight of at least one copolymer of ethylene and of at least one $\alpha$-olefin (C) having a relative density of between 0.865 and 0.915 and a degree of crystallinity at least equal to 5 %, and

   d) of 0 to 5 parts by weight of at least one low density polyethylene (D).

2. Compositions according to Claim 1, characterized in that they contain, per 100 parts by weight of polymeric phase:

   a) from 30 to 55 parts by weight of copolymer (A)

   b) from 20 to 30 parts by weight of terpolymer (B)

   c) from 15 to 45 parts by weight of copolymer (C)

   d) from 0 to 3 parts by weight of polyethylene (D).

3. Compositions according to Claim 1, characterized in that they contain, per 100 parts by weight of polymeric phase:

   a) from 40 to 50 parts by weight of copolymer (A)

   b) from 25 to 30 parts by weight of terpolymer (B)

   c) from 25 to 40 parts by weight of copolymer (C).

4. Compositions according to one of Claims 1 to 3, characterized in that the hydrated inorganic filler is alumina hydrate used in a ratio of 168 parts by weight per 100 parts of polymeric phase.

5. Compositions according to one of Claims 1 to 4, characterized in that the copolymer (A) contains about 5 to 35 mol% of units derived from alkyl (meth)acrylate.

6. Compositions according to one of Claims 1 to 5, characterized in that the terpolymer (B) comprises:
   - from 83 to 98.7 mol% of units derived from ethylene,
   - from 1 to 14 mol% of units derived from at least one ester of acrylic and/or methacrylic acid, and
   - from 0.3 to 3 mol% of units derived from an unsaturated dicarboxylic acid anhydride.

7. Compositions according to one of Claims 1 to 6, characterized in that the terpolymer (B) has a standard melt index of between 1 and 10 dg/min (190°C, 2.16 kg load).

8. Compositions according to one of Claims 1 to 7, characterized in that the copolymer (C) has a standard melt index of between 1 and 5 dg/min (190°C, 2.16 kg load).

9. Compositions according to one of Claims 1 to 8, characterized in that they have a limiting oxygen index at least equal to 40 %, an elongation at break of at least equal to 100 % and a tensile strength at least equal to 10 MPa.

10. Compositions according to one of Claims 1 to 9, characterized in that they are additionally crosslinked by means of a sufficient quantity of crosslinking agent to prevent creep at the envisaged conversion temperature.

11. Industrial articles containing a composition according to one of Claims 1 to 10.

12. Industrial articles according to Claim 11, characterized in that they consist of an electrical cable coating.